# EUROPEAN PATENT APPLICATION

(11) **EP 4 298 903 A1**
(43) Date of publication of application: **03.01.2024**
(21) Application number: 23182780.9
(22) Date of filing: 30.06.2023
(51) Int. Cl.: A01K 69/08

(54) **METHOD FOR REDUCING A POPULATION OF HARMFUL WALKING AQUATIC ANIMALS IN WHICH THE ANIMALS ARE LURED TOWARDS AN OPEN FEEDING TRAY FOR NATURAL ENEMIES, AND A DEVICE FOR THE SAME**

(30) Priority: 01.07.2022 NL 2032351
(71) Applicant: BuWa Groep B.V., 4101 CK Culemborg (NL)
(72) Inventor: BERGSMA, Joost Herman, 4101 CK Culemborg (NL); VAN DE HATERD, Robert Johannes Wilhelmus, 4101 CK Culemborg (NL)
(74) Representative: EP&C

(57) **Abstract**

The present invention relates to a method and animal trap for reducing a population of harmful walking aquatic animals (32), comprising:
• placing an animal trap (4) in a body of water, which animal trap comprises one or more entry points (12) for the harmful animal (32) to enter the animal trap and at least one trap exit opening (10);
• placing an animal collector spaced away from the animal trap (4), which animal collector comprises at least one collector inlet opening (18); and
• providing a connection part (16) connected to the trap exit opening (10) and the collector inlet opening (18), wherein the connection part (16) is configured for allowing the harmful animal (32) to walk from the animal trap (4) to the animal collector; wherein at least a part of the animal collector is placed outside of the water, and
**characterized in that** the animal collector is formed by a feeding tray (22) comprising an open top, and
wherein the method further comprises the step of
• taking of the harmful walking aquatic animal (32) from the feeding tray by natural enemies of the harmful walking aquatic animal (32).

## Description

### FIELD OF THE INVENTION

The present invention relates to a method for reducing a population of harmful walking aquatic animals, in particular a population of crustaceans.

### BACKGROUND OF THE INVENTION

Pests of harmful animals can cause great nuisance all over the world by damaging environments and ecosystems. In some cases, these harmful animals concern aquatic animals. Harmful aquatic animals establish themselves in water bodies where they induce wide changes in aquatic ecosystems which can cause severe ecological and economic impact. A major threat is especially posed by harmful walking aquatic animals. These harmful walking aquatic animals can walk on both water and land and can therefore easily travel from one water body to another, which accelerates the spread of the animals and further increases the risk of damages. Harmful walking aquatic animals are for example some type of turtles, walking fish and crustaceans, such as the procambarus clarkii, or the red swamp crayfish, native to northeastern Mexico and southcentral USA. The red swamp crayfish is an extremely invasive species in Europe and is becoming more and more dominant in and near bodies of fresh water, such as rivers, streams, lakes, ponds, irrigation channels and reservoirs. Because these red swamp crayfish easily adapt to their environment, they have even been found in water areas with higher salt levels, such as estuaries. These crayfish dig burrows in the banks, dikes and embankments around water bodies, which reduces reinforcement and increases the likelihood of a breach. This has major consequences for low-lying fields and residential areas. In addition, water quality and biodiversity is reduced by these harmful animals. They eat water creatures and destroy water plants, which are important for water quality and biodiversity. As a result of all the damage caused by harmful walking aquatic animals there is currently a growing necessity for solutions that efficiently decrease the populations of these animals.

As walking aquatic animals have always been an important food source, traps have been known in the art for a long time. US1728645A discloses a trap with sloped walls that is placed on the bottom of a body of water. The trap comprises a top with an opening. Walking aquatic animals, such as lobsters or crabs, walk up to the side of the trap, after which they fall into the opening. These animals are then caught as they are not able to swim through the opening in the top. After multiple animals have been caught, the cage is retrieved from the water body and emptied manually.

Manual emptying of the trap according of US1728645A is a major disadvantage. Emptying of the trap is a heavy and time-consuming laborious task. In large water-rich areas where harmful walking aquatic animals are omnipresent, a plurality of traps will need to be used to be able to actually reduce the population of harmful animals. Manual emptying of all of these traps will therefore require a lot of labour. The crayfish are a well-valued human food source and can be sold to restaurants; therefore manual emptying can be cost-effective when a large population is present. However, to reach ecologically acceptable population levels, the population has to be reduced to such a low level that manually emptying becomes very costly.

Another disadvantage herewith is that these traps usually have a cage-like construction with openings, in this case an exit trap door and meshes, large enough for immature animals to exit the trap. These small animals have only little commercial value, thus making it unnecessary to keep them in the trap. However, in order to decrease the population size of a harmful animals, escape of the immature animals is detrimental. Accordingly, the trap according to US1728645A is not suitable for reducing a population of harmful walking aquatic animals.

CN210538298 U discloses a fishing device that can automatically catch and separate eels, fish, shrimps and crabs. The trap is said to be particularly suitable for catching these animals in rice fields as food source or to reduce pests. The fishing device consists of a ground cage in which the animals are trapped, which comprises an eel collection area and a fish collection area. Connected to the ground cage is a cylindrical cage which opens out in two other cages, one shrimp cage for collecting shrimp and a crab cage for collecting crabs. Both shrimps and crabs move through the cylindrical cage and fall in the shrimp cage. As opposed to the shrimp, crabs are able to climb out of the shrimp cage, after which they are directed to the crab cage from which they cannot leave. The animals are then collected from the individual areas manually.

A disadvantage of the fishing device according to CN210538298 U is that the manual emptying of the different areas is a heavy and time-consuming laborious task as mentioned above.

Another disadvantage herewith is that, besides harmful animals, non-harmful animals are very likely to enter the ground cage as well. These non-harmful animals are therefore caught in the fishing device, which causes unnecessary animal suffering.

Another disadvantage herewith is that the entire fishing device is made of a net. This also increases the chance of small, immature animals escaping from the fishing device, posing the same problems as mentioned above. Moreover, a net cannot withstand the strong claws of crustaceans on the long term, thus making the fishing device only suitable for some types of harmful walking aquatic animals.

On the website of the Belgian company Vlaamse Miliuemaatschappij a mitten crab trap is disclosed to catch mitten crabs during the migration season. The trap is provided at a water passage and comprises a trough that is placed on a bottom surface of the water passage while extending over its entire width. As the mitten crabs migrate through the water, they walk over the trough and they fall into it. The animals may thereafter walk from the trough through a tube to a box in which the animals are collected. The animals are then manually collected from the box.

A disadvantage herewith is that, again, the box needs to be emptied manually, proving to be a very time consuming task. In addition, placing, moving and/or cleaning of the trap is very labor intensive due to the large size of the trough that is placed across the water passage.

Another disadvantage herewith is that the trap only catches mitten crabs during the migration period. These migration periods happen only for a short period of time each year. In addition, the migration behavior of male and female crabs is different, and immature animals may not participate in the migration season at all. It will thus be very difficult to effectively reduce a population of mitten crabs with such a trap on the long term.

Another disadvantage herewith is that that the trap, of which the trough is to be placed over the entire width of the water passage, may disrupt the migration behavior of other (walking) animals in the water, thereby further disrupting the local ecosystems.

### DESCRIPTION OF THE INVENTION

The present invention aims to overcome the above disadvantages at least partly or to provide a usable alternative. In particular the present invention aims to provide a method for reducing a population of harmful walking aquatic animals that is less labour intensive and therefore can be used to reduce the population to ecologically desired levels.

In a first aspect, the present invention provides a method for reducing a population of harmful walking aquatic animals according to claim 1. The method comprises the steps of:
- placing an animal trap in a body of water, which animal trap delimits a trapping zone, wherein the animal trap comprises one or more entry points for the harmful animal to enter the trapping zone, wherein the one or more entry points are configured for preventing the harmful animal from exiting the trapping zone again via the one or more entry points, and wherein the animal trap comprises at least one trap exit opening;
- placing an animal collector spaced away from the animal trap, which animal collector comprises at least one collector inlet opening; and
- providing a connection part that comprises a first end connected to the trap exit opening and a second end connected to the collector inlet opening, wherein the connection part is configured for allowing the harmful animal to walk from the animal trap to the animal collector;
- wherein at least a part of the animal collector is placed outside of the water, and wherein the animal collector is formed by a feeding tray that comprises an open top for allowing natural enemies of the harmful walking aquatic animal to take the harmful walking aquatic animal from the feeding tray.

The method for reducing a population of harmful walking aquatic animals, in particular for a population of crustaceans, such as the red swamp crayfish, can be applied in any water-rich area where the harmful animals have established themselves. The method comprises providing a trapping device having an animal trap that is positioned in a body of water, preferably placed on or buried in the aquatic bed of the body of water. The animal trap is designed to catch only the harmful walking aquatic animal and prevent bycatch of any non-harmful swimming aquatic animals. The animal trap delimits a trapping zone which both fully grown as well as immature species of the harmful animals can enter through one or more entry points in the animal trap. Once the harmful walking aquatic animals have entered the trapping zone through the one or more entry points, they are not able to leave the trapping zone via the same entry points. The entry point is e.g. placed at a sufficient height in the animal trap, preventing the walking aquatic animal from climbing out of the animal trap. In contrast, the entry point can be used by swimming aquatic animals to both enter and exit the animal trap. Thus advantageously, bycatch of non-harmful swimming aquatic animals is prevented. The animal trap further comprises a trap exit opening through which the harmful walking aquatic animals can leave the trapping zone.

Spaced away from the animal trap, an animal collector is placed comprising at least one collector inlet opening. To connect the trap exit opening and collector inlet opening, a connection part is provided having a first end connected to the trap exit opening, and a second end connected to the collector inlet opening. The connection part is configured for allowing the harmful animal to walk from the animal trap to the animal collector. The connection part is for example a tube-like connection, that is preferably flexible.

Because it is impossible for the harmful walking aquatic animals to leave the animal trap through the entry point, the way for the harmful animal that has entered the trapping zone is to walk through the trap exit opening, into the connection part to the animal collector. This takes advantage of the characteristic feature of the harmful animals, namely their ability to walk in water and on land and their willingness to walk into small spaces. Alternatively, the harmful animals can be transported through the connection part automatically, such as by blowing or pushing the animals through the connection part. This will however increase animal suffering and it will require additional components that would increase the costs of assembly and maintenance of the trapping device. Automatic transport is thus not preferred. Any swimming animals also entering the trapping zone and/or the connection part will be able to return and exit the trapping zone through the one or more entry points in the animal trap.

At least a part of the animal collector is placed outside of the water and the animal collector is formed by a feeding tray having an open top. A part of the open top is for example positioned above the water surface of the body of water.

Advantageously, due to the feeding tray having an open top and being positioned partially outside of the water, the contents of the feeding tray are freely accessible to any predator. According to the inventive thought, the method further comprises the step of taking of the harmful walking aquatic animal from the feeding tray by natural enemies of the harmful walking aquatic animal. Predators, or natural enemies, are organisms that prey upon other organisms as part of their natural ecological interactions. These natural enemies for example include flying natural enemies, such as grebes, herons, storks, kingfishers, cormorant, and gulls, or natural enemies living on land, such as foxes and otters. Humans are not considered natural enemies in the context of the invention. Once the harmful animals have entered the feeding tray, a predator, such as the harmful animal's natural enemy, can remove the animal from the feeding tray. Thus advantageously, the feeding tray at any time of day both during daylight as well as in the dark continuously and automatically may get eaten empty by natural enemies. The feeding tray advantageously gets emptied non-manually from the harmful animals without any human effort being necessary during operation after installation of the trapping device. As no manual labour is required for removing the harmful walking aquatic animals from the trapping device, the population of the harmful animals in water rich areas is efficiently decreased. It might be required to train the natural enemies to recognise the harmful walking aquatic animal as a food source. Animals that have recently established themselves in new areas often do not attract a lot of attention from potential natural enemies, as these are not yet aware of the nutritional value of the harmful animal. Training of the natural enemies can e.g. be achieved by teaching a select number of natural enemies to take the harmful animal from the feeding tray, after which the select number of natural enemies teach this forward to the rest of their populations.

In a preferred embodiment the feeding tray may be kept continuously open during operation for the natural enemies to take out and eat the harmful animals. This might be at least for several weeks but also for several months or even longer. The feeding tray thus may be eaten empty in a continuous manner over an extended period of time without the need for manual interaction or emptying.

In an embodiment of the invention, the open top feeding tray may be a lidless feeding tray. The term lidless indicates the absence of a separate cover or closure mechanism. The absence of a lid prevents unexpected closure of the tray, such as due to adverse weather conditions or animals inadvertently closing it. It furthermore provides easy and unobstructed access to the food for the natural enemies, eliminating the need for them to navigate or interact with a lid. This direct access makes it more convenient for the animals to reach and consume the food. Additionally, the absence of a lid allows the food in the tray to be clearly visible to the animals. This enhanced visibility readily attracts them and facilitates their ability to locate and consume the food.

The open top feeding tray may be placed in a variety of places, but it is preferred that the feeding tray floats on the water surface of the body of water. As such, the animal trap can be placed on any position in the water body without compromising the efficiency with which a population of harmful animals is decreased. The animal trap can for example be placed in hard to reach areas, such as in the middle of a water body, with the feeding tray floating on the water surface. Manual emptying of the feeding tray would be practically difficult, but flying natural enemies can easily take the harmful animals from the feeding trays. The trapping device can thus efficiently decrease a population of harmful walking aquatic animals in water bodies that extend over a large area. In addition, floating the feeding tray avoids problems with landowners.

Alternatively, the feeding tray may be placed on e.g. river banks or shorelines next to the water. This advantageously allows, natural animals that live on land, such as foxes and otters, to easily take the harmful animals from the feeding tray. To ensure stability of the feeding tray when natural enemies take harmful animals from the feeding tray, the feeding tray may be weighted and/or secured. A weighted base may be used as an example.

Moreover, a supporting unit, preferably a pillar- or pole-like supporting unit, may be used to secure the feeding tray in its position, either on land or in the water.

The connection part between the animal trap and the open top feeding tray preferably may have a textured surface, such as a ribbed surface. The textured surface enhances the grip for the animals attempting to climb upwards. The connection part preferably also may comprise small openings for allowing water to flow into and out of the connection. This allows for easier placement of the connection part in the water, and it provides for a presence of continuously refreshed water in the connection part.

In an embodiment of the invention, the open top feeding tray may comprise a lid via which it can be temporarily closed outside normal operation. This lid then preferably is configured such lockable in the open position that it can only be closed manually due to direct human effort or intervention, and not accidentally by wind or animals, such that during normal operation the open top can be guaranteed. This lid then for example can be kept continuously open during periods of a relative low inflow of harmful animals, and for example can be closed during periods of a relative high inflow of harmful animals. As such, the feeding tray might be closed during a start up period or during seasons in which many of the harmful animals migrate or seek hiding places. During these periods there is a large number of harmful animals that enter the animal trap and therefore also enter the feeding tray. For commercial purposes it can be advantageous to harvest this large number of animals manually in order to sell them for (human) consumption. On the other hand, manual emptying will not be commercially attractive all year round, and it will specifically not be attractive during periods in which there is only a low inflow of harmful animals. As such, during periods in which less animals enter the feeding tray, the lid of the feeding tray can be opened. This ensures that during periods when it is not commercially feasible to empty the feeding tray manually, the feeding tray will be emptied by the natural enemies of the harmful animal. As a result, the population of harmful animals can be reduced all year round. The lid can also be opened automatically. Optionally, sensors measuring the number of animals in the feeding tray can be used, which automatically determines whether it is economically advantageous to empty the feeding tray manually and thus close the lid, or whether to open the lid for the natural enemies to take the harmful animals.

In an embodiment of the invention, a bait supply is provided which is configured for placing bait in the animal trap. The bait is used to lure the harmful walking aquatic animals into the trapping zone. Bait can for example be placed manually in the animal trap, or the bait can be hung above the one or more entry points to attract animals to the entry points, after which the animals fall into the trapping zone. Alternatively, the bait can be placed in or above the animal trap automatically, e.g. by using a bait dispenser that is configured for dropping bait to be dropped through a drop tube into animal trap. Advantageously, the use of bait increases the likelihood of harmful animals to enter the animal trap. The bait is preferably provided at regular intervals. The bait dispenser is for example configured for releasing the bait at set times into the animal trap. The regular intervals ensure that bait is constantly present in or near the trapping zone, thus also constantly attracting harmful animals into the animal trap.

In an embodiment of the invention, the method comprises a step of cleaning the trap, connection part and/or feeding tray. When in use, dirt can accumulate on the different parts by for example algae growth or the deposition of other organic matter, which when not clean might clog the different parts of the trapping device. Cleaning the parts may for example comprise simultaneously flushing or brushing the trap, connection part and feeding tray, or cleaning each part separately. Flushing may be performed when the trapping device is placed in the water body or after removal of the trapping device from the water. Additionally or alternatively, the device may comprise a dirt-repellent coating to prevent the accumulation of dirt or algae growth on the parts, thereby reducing the need for cleaning and thus the manual labour required to operate the device.

In a second aspect, the present invention relates to a trapping device for reducing a population of harmful walking aquatic animals, comprising
- an animal trap placed in a body of water, which animal trap delimits a trapping zone, wherein the animal trap comprises one or more entry points for the harmful animal to enter the trapping zone, wherein the one or more entry points are configured for preventing the harmful animal from exiting the trapping zone again via the one or more entry points, and wherein the animal trap comprises at least one trap exit opening;
- an animal collector placed spaced away from the animal trap, which animal collector comprises at least one collector inlet opening; and
- a connection part that comprises a first end connected to the trap exit opening and a second end connected to the collector inlet opening, wherein the connection part is configured for allowing the harmful animal to walk from the animal trap to the animal collector;
wherein at least a part of the animal collector is placed outside of the water, and wherein the animal collector is formed by a feeding tray that comprises an open top for allowing natural enemies of the harmful walking aquatic animal to take the harmful walking aquatic animal from the feeding tray.

The trapping device according to the invention comprises an animal trap that is positioned in a body of water. The animal trap is preferably placed on or buried in the aquatic bed of the body of water. If necessary, extra weight may be added to the animal trap or the animal trap can be fixed in the ground to ensure the animal trap remains in position on or buried in the aquatic bed. The animal trap delimits a trapping zone and one or more entry points through which harmful walking aquatic animals can enter the trapping zone. When the animal trap is placed on the aquatic bed of the water body, the harmful animals that walk on the aquatic bed and encounter the trap can walk up the trap and enter the trapping zone through one of the entry points. To facilitate the easy access of the entry points in the trap, the trap may for example comprise outer walls that are inclined or stepped, such that the harmful animals can walk up to the outer walls. The animal trap for example has a conical frustum shape or a trapezium shape, optionally having a bottom. Alternatively, the animal trap is buried in the aquatic bed such that only a part of the animal trap with one or more entry points is at the same level or just above the aquatic bed of the body of water. Harmful walking aquatic animals are then not required to walk up the animal trap but fall through one of the one or more entry points in the trapping zone when walking on the aquatic bed of the water body. The animal trap is preferably sized such that it can be placed on any position on the aquatic bed, both near the waterfront and in the middle of a water body, and it can easily be picked up and moved. The animal trap is therefore not bound to a water passage in the water body to catch animals.

The one or more entry-points in the animal trap are configured for allowing the harmful animals to enter the trapping zone but are simultaneously configured for preventing the harmful animals from exiting the trapping zone. These entry points are for example provided at a sufficient height in the animal trap, such as in a top part of the animal trap or at a height in a wall part of the animal trap, to prevent the harmful walking aquatic animals from climbing out of the trap. In contrast, non-harmful swimming aquatic animals are able to leave the trapping zone through the entry-points, thus advantageously bycatch of any non-harmful swimming aquatic animals is prevented. In addition, swimming natural enemies can take the harmful animals from the animal trap for consumption. The entry points are preferably one or more through-holes.

The animal trap further comprises at least one trap exit opening. The trap exit opening is preferably positioned sufficiently low in the animal trap to allow the harmful walking aquatic animal to enter the trap exit opening. The trap exit opening is for example provided sufficiently low in a wall part of the animal trap, or in a bottom part of the animal trap. Connected to the trap exit opening is a first end of a connection part. The connection part further comprises a second end that is connected to an animal collector, more specifically to a collector inlet opening in the animal collector. The animal collector is placed spaced away from the animal trap. The connection part is configured for allowing the harmful walking aquatic animal to walk from the animal trap to the animal collector. The connection part is e.g. a passage, such as a hollow tube, that is preferably ribbed to ensure that there is enough grip as the animals walk through the connection. Thus, harmful walking aquatic animals that have entered the trapping zone can pass through the trap exit opening, then walk through the connection part and through the collector inlet opening into the animal collector. The collector inlet opening in the animal collector is preferably positioned at a sufficient height to prevent the walking aquatic animals from re-entering the connection part once they have passed through the collector inlet opening. The trapping device is thus configured to only allow the harmful walking aquatic animals to move from the animal trap, via the connection part to the animal collector. The animal collector is placed at least partially outside of the water.

According to the inventive thought, the animal collector is formed by a feeding tray that comprises an open top. Thus advantageously, once walking aquatic animals have entered the feeding tray, they are exposed to their surroundings. Consequently, any natural enemy of the harmful walking aquatic animal can take the harmful animal from the feeding tray for consumption. This part of the invention, i.e. the feeding tray which exposes the harmful animals to their surroundings such that the natural enemies are able to take the harmful animals from the feeding tray, facilitates the automatic emptying of the feeding trays and consequently makes manual emptying of the tray by humans superfluous. As a result, the manual labour that is required to decrease a population of the harmful animals is decreased. And because of the feeding tray, natural enemies of the harmful animals learn to recognize and appreciate the harmful animals as an easy food supply. They may therefore be more likely to hunt the harmful animals in the wild as well.

Both the feeding tray and the animal trap can be made from various materials, including synthetic materials, such as plastics, or metal, such as steel. The advantage of using metal for the feeding tray and/or the animal trap is that it eliminates the leaching of synthetic materials into the water. Additionally, if the animal trap is made of metal, it will have a relatively heavy weight, which ensures that it remains stable on the bottom without additional support.

The trapping device preferably has a closed structure, meaning that the trap, connection and feeding tray are made from materials that do not have unwanted openings through which immature animals can escape, such as would be possible if the trapping device were made of a net. This prevents any small animals from escaping and further increases the efficiency with which the population size of a harmful walking aquatic animal can be decreased.

Multiple trapping device may be placed in water-rich areas to increase the rate with which a population of harmful walking animals is decreased. Due to the automatic emptying of the trapping devices the traps need to be checked less frequently by hand. In addition, it is also possible to have an animal trap with multiple connection parts that are each connected to one or more feeding trays, and additionally or alternatively, to have multiple traps that are each connected to the same feeding tray.

In a preferred embodiment, the feeding tray comprises one or more water-exchange openings that are configured to be in flow communication with the body of water. Through the water-exchange openings a layer of water may be formed on the bottom surface of the feeding tray during operation. The water-exchange openings may be provided in a lower part of the feeding tray, preferably in a lower part of a circumferential wall of the feeding tray. The one or more water-exchange openings are configured for allowing the flow of water into and out of the feeding tray when a part of the feeding tray is placed inside of the water. The one or more water-exchange openings have a cross-section that prevents harmful animals that have entered the feeding tray, from exiting the feeding tray through the one or more water-exchange openings.

When the feeding tray is partially immersed in water, the presence of the one or more water-exchange openings facilitates the inflow of fresh water from outside the tray, resulting in a circulation of both fresh and existing water within. This benefits harmful animals, who typically inhabit water environments, as it provides improved living conditions when a water layer is present in the feeding tray. Consequently, the trap becomes more animal-friendly, allowing the creatures to survive for extended periods. Moreover, the feeding tray itself, along with its contents, experiences slower heat absorption, thereby further enhancing the conditions for the harmful animals. Furthermore, there will also be reduced algae growth in the feeding tray.

The one or more water-exchange openings may have a variety of shapes, such as circular or rectangular, or the openings may have an elongate shape, such as a slit. An elongate shape is preferred because it allows for an increased total surface area of the openings without enlarging the cross-section to the extent that harmful animals can escape through them. Preferably, multiple water-exchange openings are provided that are distributed along the entire circumferential wall of the feeding tray.

In an embodiment of the invention, the feeding tray is configured for floating on the water surface of a body of water. Because the feeding tray can float on the water surface, the animal trap can be placed on any position in the water body without compromising the efficiency with which a population of harmful animals is decreased. The animal trap can for example be placed in hard to reach areas, such as in the middle of a water body, with the feeding tray floating on the water surface. Manual emptying of the feeding tray would be practically impossible, but flying natural enemies, such as grebes, herons, storks, kingfishers, cormorant, and gulls can easily take the harmful animals from the feeding trays. The trapping device can thus efficiently decrease a population of harmful walking aquatic animals in water bodies that extend over a large area. In addition, the feeding tray can be positioned on river banks or shorelines next to the water. Thus advantageously, natural animals that live on land, such as foxes or otters, may also take the harmful animals from the feeding tray.

In an embodiment of the invention, the feeding tray may comprise floating members configured for allowing the feeding tray to float on the surface of the body of water. The floating members may include buoyant materials, such as foam blocks, air-filled containers, or inflatable devices made of e.g. rubber or plastic to provide buoyancy to the feeding tray. Additionally or alternatively, air-filled chambers may be used within the feeding tray to create sealed compartments or chambers within the feeding tray and fill them with air, which will also provide buoyancy.

The floating members offer significant advantages, particularly when one or more water-exchange openings are incorporated into the feeding tray, to prevent the feeding tray from sinking. These floating members can be positioned along the outer surface of the feeding tray, in particular at the outer surface of the circumferential wall of the feeding tray.

It is preferred that the floating members are fenders or fender-like floating members. A fender is a device or structure that may absorb impact and protect objects from damage caused by contact with other objects or surfaces. Fenders are typically made of durable materials, such as rubber, foam, or plastic, and are placed along the sides or edges to create a cushioning effect. The use of fenders or fender-like floating members thus simultaneously keep the feeding tray afloat while also protecting the feeding tray from damage caused by contact with other objects or surfaces.

The floating members may be attached to the feeding tray via height-adjustable connecting members, such as brackets. The brackets are preferably configured for adjusting the height of the floating members, thereby allowing control over the depth at which the feeding tray is submerged in the water. In the case of murky water for example, it is beneficial to position the feeding tray at a shallower depth, as it allows natural enemies to have better visibility of the harmful animals. Conversely, in clear water, the feeding tray can be placed at a deeper level.

In a preferred embodiment, the feeding tray may have a height in the range of 20-50 cm. A height below this range would provide an opportunity for the captured harmful animals to escape from the tray, which is undesirable. On the other hand, a height exceeding this range would hinder natural enemies from reaching the bottom of the feeding tray or place excessive strain on the animals, impeding their ability to access the food comfortably. Having a height in the range of 20-50 cm thus ensures both the containment of undesired animals and the ease of access for the natural enemies.

Additionally or alternatively, a bottom of the feeding tray may have dimension in the range of 1-2 m x 1-2 m (length x width). This generous size allows the harmful animals to disperse. This is especially advantageous for capturing red swamp crayfish, as they prefer not to climb over one another, unlike species such as the wolf crab.

In an embodiment of the invention, the trapping device may comprise a support platform or support bar for supporting the natural enemy when the natural enemy takes the harmful aquatic animal from the feeding tray. An advantage thereof is that the content of the feeding tray is easy for the natural enemy to reach without straining or feeling uncomfortable. Additionally, a textured surface to grip onto while feeding may be provided on the support platform or support bar. Providing a textured surface may help the natural enemy to feel more comfortable and secure during feeding. The textured surface may for example be formed by wood or a coconut mat.

The support platform may be formed by a sideways projecting flange or an overhang on the circumferential wall of the feeding tray. The flange or overhang may be provided on the entire circumference of the circumferential wall or on only a part thereof. The flange or overhang then preferably can be provided on top of the circumferential wall. The flange or overhang may extend inwardly, towards the contents of the feeding tray, and/or outwardly, away from the contents of the feeding tray. When extending inwardly, the overhang or flange serves as a barrier preventing harmful animals from escaping the feeding tray. When extending outwardly, the overhang or flange acts as a deterrent, preventing other animals like rats or mice from entering the feeding tray.

Additionally or alternatively, a bar, such as a perch, may be attached to the feeding tray. The perch may be appropriately sized to accommodate the natural enemy, such as the feet of birds, such that they may comfortably grip without straining their toes or losing balance.

In an embodiment of the invention, the trapping device comprises a feeding tray supporting unit, preferably a pole-like supporting unit, such as a pillar, that supports the feeding tray above the water surface of the water body. Because the feeding tray regularly encounters large animals, such as large birds or foxes, it is quite possible that the tray will be moved or in some cases even sink. The feeding tray supporting unit ensures that the feeding tray remains in a desired position to facilitate easy access of the contents of the feeding tray to the natural enemies. Alternatively to a pillar, other supporting constructions can be used as well to ensure that at least a part of the feeding tray remain outside of the water.

In an embodiment of the invention, the open top feeding tray comprises a lid with which the feeding tray may be closed. Consequently, the feeding tray may comprise an open configuration or a closed configuration. The open configuration is advantageous during periods of low inflow of harmful animals in the feeding tray in which manual emptying of the feeding tray is not commercially attractive. During these periods, the natural enemies of the harmful animal can then be used to reduce the population of harmful animals. Alternatively, during periods of high inflow of the harmful animals, the feeding tray may have a closed configuration for allowing manual emptying.

In an embodiment of the invention, the trapping device comprises a bait supply configured for placing bait in the animal trap. The bait supply may either be placed in the trapping zone itself, or it can be hung above the animal trap. In an embodiment of the invention, the bait supply comprises a bait dispenser and drop tube configured for dropping and guiding bait to the animal trap. The drop tube may for example comprise a first end positioned above the water surface and a second end positioned above an entry-point in the animal trap. Bait can be dropped in the first end of the bait supply, after which the bait drops through the tube until it reaches the second end of the shaft. The second end of the shaft may be open such that the bait drops out of the shaft, through the entry point into the trapping zone. Harmful animals that have entered the trapping zone are able to consume the bait. Alternatively, the second end of the shaft may be covered by e.g. a net. Harmful animals are then lured to the entry-point but are not able to reach the bait and instead fall into the trapping zone through the entry-point. The bait thus lures the harmful animals into the trap, thus advantageously increasing the rate with which the population of harmful animals is decreased. The type of bait can be specifically chosen to attract only the harmful animal, thus further preventing bycatch of non-harmful animals.

In addition, the bait dispenser may be configured for automatically providing bait to the bait supply. The bait dispenser preferably releases the bait at regular intervals. To further decrease the requirement of manual labour, the bait supply dispenser can be automatically powered by e.g. a compatible solar cell, that would be present on the trapping device.

An upper part of the bait supply may advantageously be configured to serve as an observation spot for birds. Birds are naturally attracted to observation spots due to various reasons, such as safety, predation awareness, and territorial defence. As an alternative to using the bait supply as a bird observation spot (or in addition thereto), an additional bird observation spot may be added to the feeding tray. This provides an extra dedicated area for birds to perch and observe their surroundings while interacting with the feeding tray.

In an embodiment of the invention, the entry points in the animal trap are provided as through-holes. The animal trap may for example comprise a single through-hole through which the harmful animals fall into the trapping zone after having moved up to the animal trap. This through-hole can be provided in for example a bottom wall part, a side wall part and/or a top wall part of the animal trap. Alternatively, the animal trap may comprise several through-holes of equal or different sizes through which animals can enter the trapping zone. Additionally or alternatively to the through-holes, the animal trap may comprise one or more tubes that open up in the trapping zone. These tubes can have equal or different diameters. The tubes can for example be provided on or extending through the above-mentioned bottom wall part, side wall part and/or top wall part. Advantageously, the tubes mimic refuge spots in which some type of harmful walking aquatic animal, such as the red swamp crayfish, seek hiding places. In this way the harmful animals are naturally attracted to the trap. An advantage herewith is that the harmful animals often seek hiding places from their natural enemies during the most vulnerable phases of their lives, which is also when they are of most interest to their natural enemies. Trapping the harmful walking aquatic animal during this vulnerable phase would thus further increases the likelihood that natural enemies take the harmful animals from the feeding tray.

In an embodiment of the invention, the trapping device comprises an elevation element configured for only allowing the harmful animal to walk in the direction of the feeding tray. This elevation element can e.g. comprise an elevation, such as a ramp, that is positioned in the trapping zone and increases in height in the direction of the trap exit opening. After the harmful animals present in the trapping zone walk up the ramp and fall off it, they are not able to climb up the ramp again. Consequently, the harmful animals that have are only able to walk in the direction of the trap exit opening to the feeding tray. Alternatively or additionally, the elevation element can e.g. be provided by having the first end of the connection part partially extending below the animal trap, and the remaining part of the first opening extending above the animal trap. Advantageously, once the walking animals pass through the trap exit opening, they drop into the connection part. Due to a part of the first end of the connection part extending below the animal trap, the harmful walking aquatic animals are not able to walk or climb back into the trapping zone, while the non-harmful swimming aquatic animals are easily able to swim back into the trapping zone. This again prevents bycatch of non-harmful swimming animals. Additionally or alternatively, valves may be inserted in the connection part through which the harmful animals can only walk in one direction, namely the direction of the feeding tray.

### BRIEF DESCRIPTION OF THE DRAWINGS

The invention shall now be explained in more detail below by means of describing some exemplary embodiments in a non-limiting way with reference to the accompanying drawings, in which:
Fig. 1 show a cross-section of the trapping device according to the invention;
Fig. 2 shows a cross-section of an alternative embodiment of a trapping device according to the invention having a bait supply;
Fig. 3 shows a cross-section of an alternative embodiment of the trapping device according to the invention having a refuge spot mimicking tube;
Fig. 4 shows a cross-section of an embodiment of the invention having a feeding tray positioned on the waterfront;
Fig. 5 shows a cross-section of an embodiment of the invention having a feeding tray floating on the water surface;
Fig. 6 shows a cross-section of an embodiment of the invention having a feeding tray with a lid;
Fig. 7 shows an embodiment of the invention in which two animal traps are connected;
Fig. 8 shows an embodiment of the trapping device having a floating feeding tray according to the invention provided with floating members and water-exchange openings;
Fig. 9 shows an embodiment of the trapping device having a feeding tray positioned on land; Fig. 10 shows a method for transporting the trapping device over land;
Fig. 11 shows a method for transporting the trapping device over water.

### DETAILED DESCRIPTION OF THE DRAWINGS

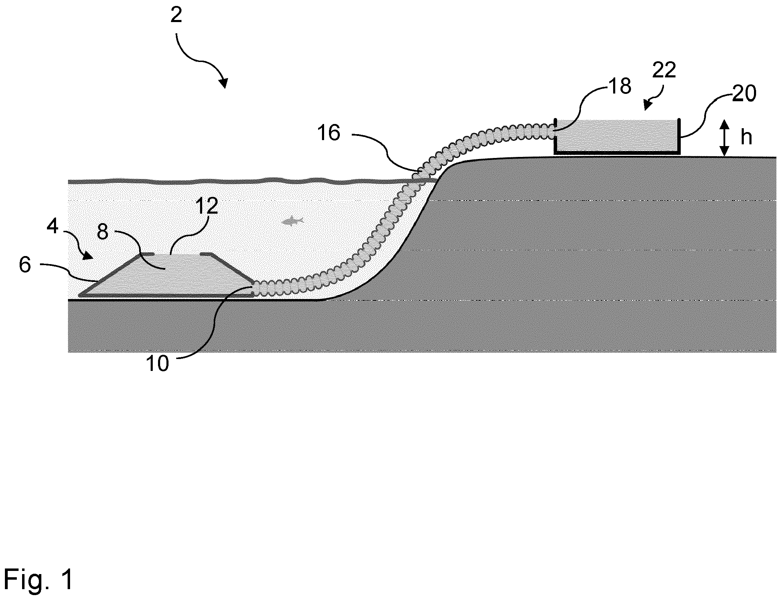

Fig. 1 shows an embodiment of a trapping device according to the invention which is in its entirety noted by reference number 2. The trapping device comprises an animal trap 4 that is positioned on the aquatic bed 5 of a body of water. The animal trap 4 delimits a trapping zone 8. Outer walls 6 of the animal trap are provided at an inclination which allows harmful walking aquatic animals to walk up to the walls 6. The animal trap 4 is for example a trapezium-shaped animal trap 4. The animal trap 4 comprises at least one trap exit opening 10 and an entry point in the form of a through-hole 12 in a top part of the walls 6. Harmful walking aquatic animals that walk up to the walls will fall through the entry point 12 into the trapping zone 8. Because the entry point 12 is positioned at a sufficient height in the animal trap 4, harmful walking aquatic animals that have entered the animal trap 4 are not able to leave the animal trap 4 again through the entry point 12. The entry point 12 preferably remains open to ensure that swimming aquatic animals can leave the trap, which advantageously prevents bycatch of non-harmful animals. In addition, swimming natural enemies can take the harmful animals from the animal trap for consumption. The entry point 12, is of a large enough size to form an entry point for both large and small harmful walking aquatic animals to enter the animal trap 4.

Connected to the trap exit opening 10 is one end of a connection part 16, which in Fig. 1 is a ribbed tube. The other end of the connection part 16 is connected to a collector inlet opening 18 in a wall 20 of a feeding tray 22. The feeding tray 22 in this embodiment is a lidless feeding tray 22. The collector inlet opening 18 is positioned at a height in the walls 20 of the feeding tray 22 to ensure that harmful walking aquatic animals are not able to climb back into the connection part 16 once they have entered the feeding tray 22. At least a part of the feeding tray 22 is positioned outside of the water. In Fig. 1 the feeding tray 22 is in its entirety positioned outside of the water on the waterfront. Alternatively, the feeding tray 22 can be floating on the water or it can be positioned on a supporting unit while being partially or in its entirety outside of the water. Advantageously, the feeding tray 22 comprises an open top which makes the contents of the feeding tray 22 freely available to the outside world. As a result, the harmful walking aquatic animals 32 that have entered the feeding tray 22 are not able to go back in the connection part 16. The animals can then be taken from the feeding tray 22 by their natural enemies for consumption. Consequently, the need for manual emptying of the feeding tray 22 is eliminated.

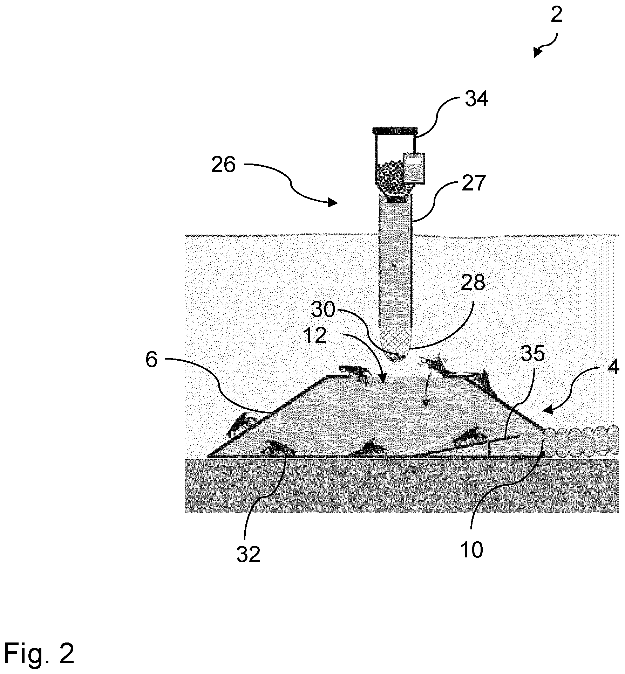

Fig. 2 shows an embodiment of the trapping device 2 having a bait supply 26. The bait supply 26 comprises a drop tube 27 having a first end which is positioned above the water surface, and a second end which is positioned above an entry point 12 in the animal trap 4. The second end comprises a net 28 in which bait 30 is collected. Advantageously, harmful walking aquatic animals 32 are lured op to the walls 6 of the animal trap 4 by the bait 30. While trying to reach the bait 30 the animals fall through the entry point 12 into the trapping zone 8. The bait 30 is dropped through the drop tube 27 automatically by a bait dispenser 34. To power the bait dispenser, a solar panel (not shown) can be used that is fixed on the trapping device 2. The animal trap further comprises an elevation element 35 represented by a ramp 35. The ramp 35 increases in heigh towards exit trap opening 10. Harmful animals 32 that walk up to the ramp 35 and fall off, will only be able to move into the direction of the exit trap opening 10 and not return back into the trapping zone 8.

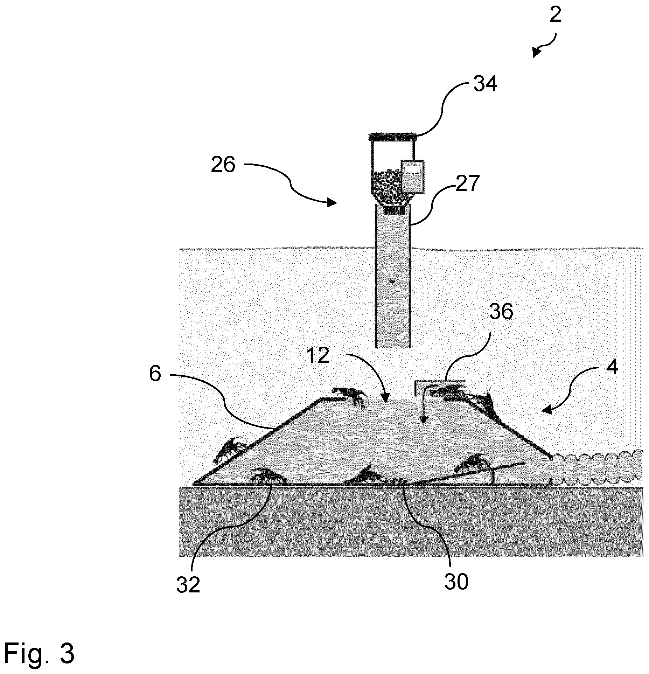

Fig. 3 shows an alternative embodiment of the bait supply 26 in the trapping device 2, which does not comprise a net 28. Instead, bait 30 is dropped directly into the trapping zone 8. Harmful walking aquatic animals are thereby directly lured into the trapping zone 8. In addition fig. 3 shows a tube 36 present on the wall 6 of the animal trap 4 which mimics a refuge spot for harmful walking aquatic animals 32. The harmful animal 32 is lured to the tube 36 while searching for a hiding place. Once the harmful animal is entered the tube 36, it will fall through the through-hole 12 into the trapping zone 8.

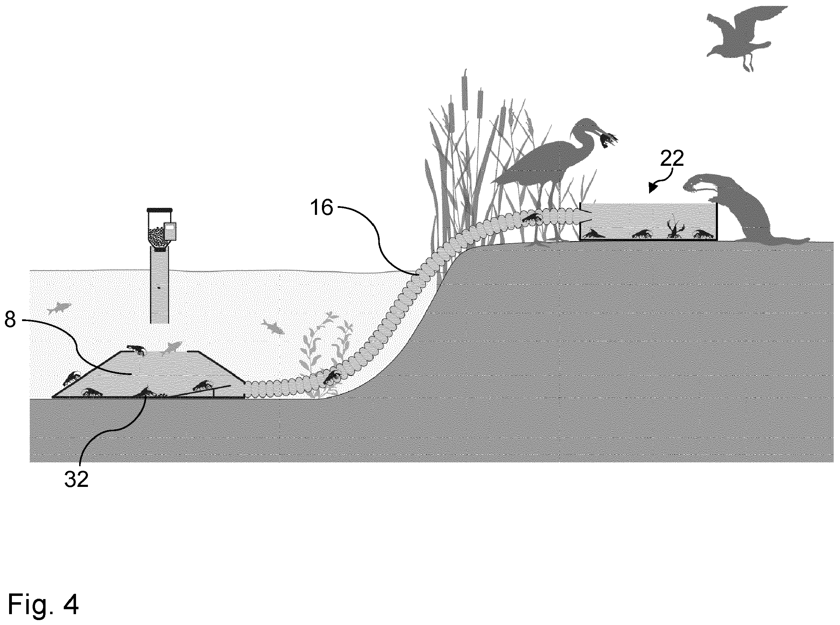

Fig. 4 shows an embodiment of the invention in which the feeding tray 22 of the trapping device 2 is positioned on the waterfront. Harmful walking aquatic animals 32 have entered the trapping zone 8 and some harmful animals 32 have moved from the trapping zone 8 through the connection part 16 into the feeding tray 22. Natural enemies of the harmful walking aquatic animal 32, such as birds, otters or foxes, may easily take the harmful animals 32 from the feeding tray 22 for consumption, thereby making manual emptying of the feeding tray 22 superfluous.

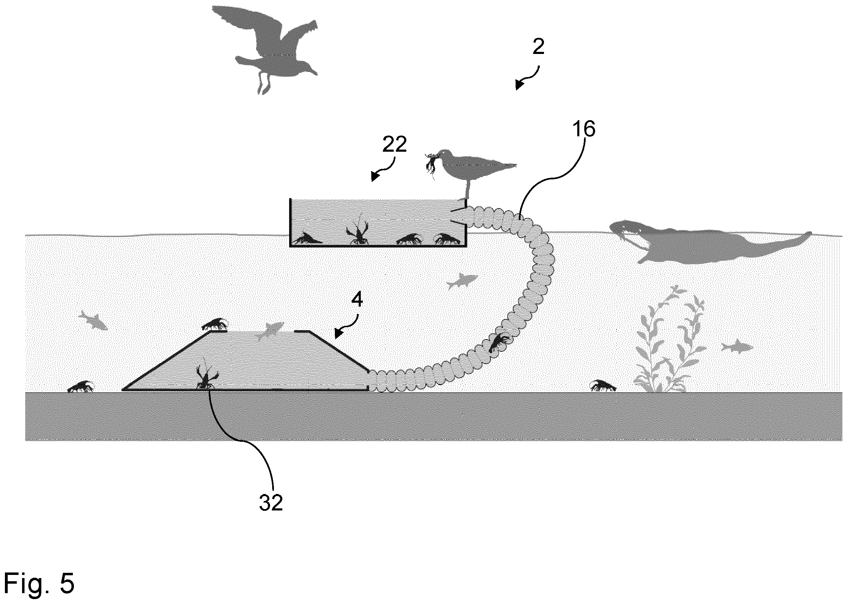

Fig. 5 shows an embodiment of the invention in which the feeding tray 22 is floating on the water surface of the water body. Again, natural enemies, such as birds, may take the harmful animals from the feeding tray 22. An advantage of having a floating feeding tray 22 that is automatically emptied is that the trapping device 2 may be placed in areas of a water body which are hard to reach for humans, such as in the middle of a water body. It is therefore possible to trap the harmful animals 32 all over the aquatic bed 5 of the water body, and not just specifically at the waterfront or at water passages.

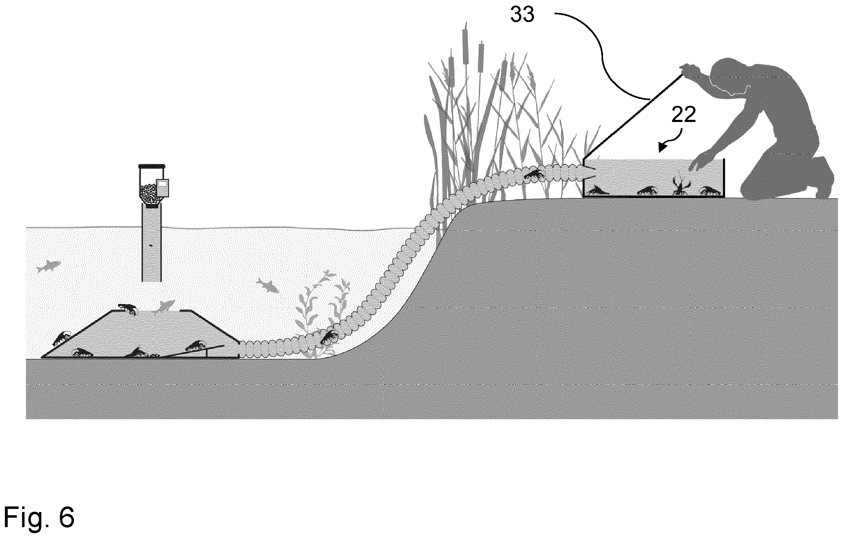

Fig. 6 shows an embodiment of the invention in which the feeding tray 22 is positioned on the waterfront and comprises a lid 33. The lid 33 can be opened manually, as shown in the figure, or automatically.

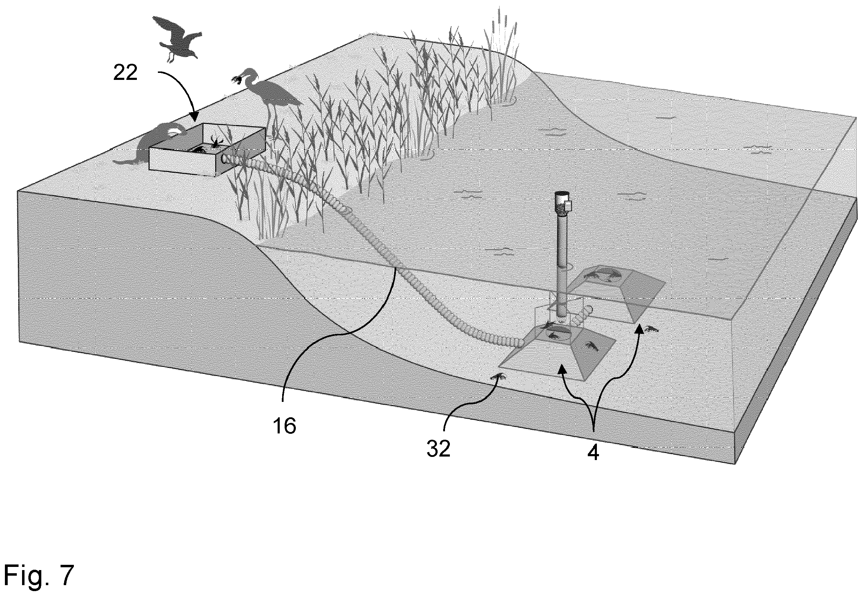

Fig. 7 shows an embodiment of the invention in which two animal traps 4 are coupled together. Advantageously, the harmful animals 32 can be caught on multiple places in the body of water while the harmful animals 32 walk into the same feeding tray 22. Alternatively, in waters in which many of the harmful animals 32 are present, a single animal trap 4 may be placed in the water to which multiple connection parts 16 are connected which open up in multiple feeding trays 22, thereby serving the large supply of harmful animals 32 to the many natural enemies that will be attracted by this large supply.

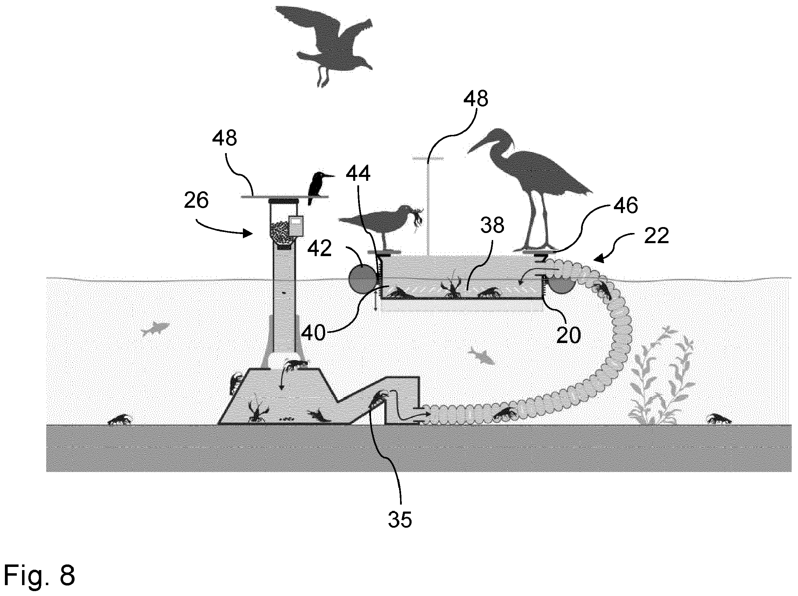

Fig. 8 shows an embodiment of a feeding tray 22 that floats on the water surface of the body of water. The feeding tray 22 is partially immersed into the water. The feeding tray 22 comprises multiple water-exchange openings 38, formed by a plurality of slits. The water-exchange openings 38 allow a layer of water 40 to be formed within the feeding tray which is in flow communication with the body of water. The layer of water 40 that is formed in the feeding tray 22 provides a more animal-friendly living environment for the captured animals and prevents excessive heating of the feeding tray 22. Simultaneously, it also inhibits algae growth. The layer of water 40 in particular has a height in the range of 5-25 cm.

To keep the feeding tray 22 afloat while water flows into the feeding tray 22 through the water-exchange openings 38, the feeding tray comprises floating members 42, which in this embodiment are formed by fenders. The floating members 42 are attached to the feeding tray 22 through height-adjustable connecting members 44 that are configured for adjusting the height of the floating members 42. Adjusting the floating members 42 therefore allows control over the depth at which the feeding tray 22 is submerged in the water.

The feeding tray furthermore comprises support platform 46, formed by a flange, on the circumferential wall 20 of the feeding tray 22. The support platform 46 may be used by the natural enemy as a support when the natural enemy takes the harmful aquatic animal from the feeding tray 22. The flange in this embodiment extends both inwardly, towards the contents of the feeding tray, and outwardly, away from the contents of the feeding tray 22. A coconut mat may be provided on top of the supporting platform 46 for extra texture and grip.

The bait supply 26 advantageously serves as an observation spot for birds. An additional observation spot 48 is provided in the feeding tray 22.

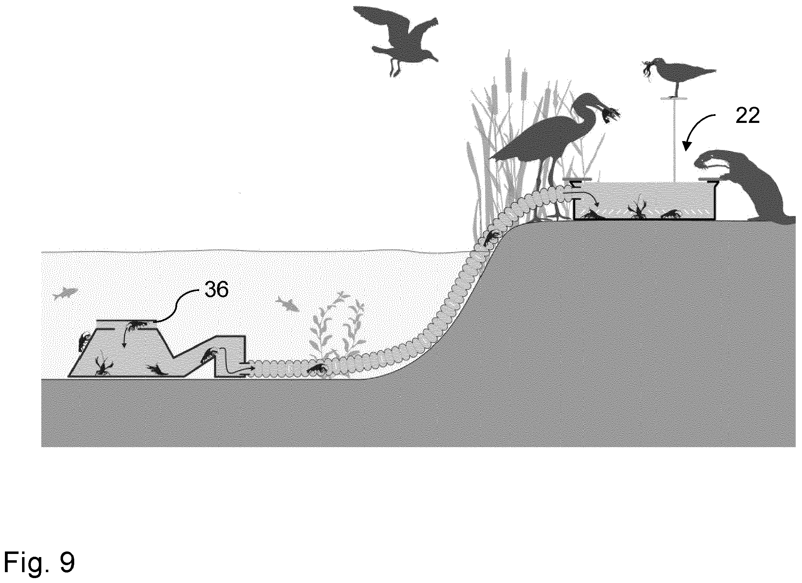

Fig. 9 shows an embodiment of the trapping device 2 wherein the feeding tray 22 is provided on land. As such, natural enemies living on land, such as otters, may also take the harmful animals from the feeding tray 22. The animal trap furthermore comprises tubes 36 present on the wall 6 of the animal trap 4 which mimics a refuge spot for harmful walking aquatic animals 32.The tube opens out into the trapping zone.

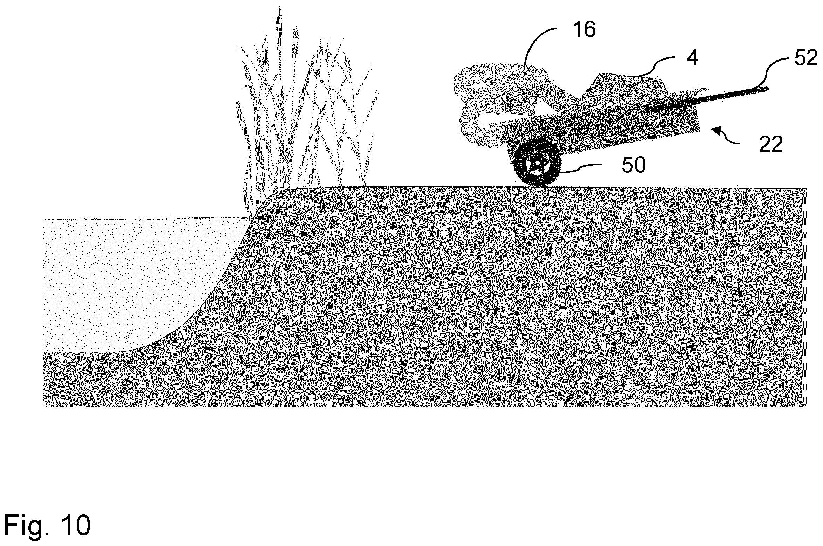

Fig. 10 shows the trapping device 2 during transportation on land. The animal trap 4, when taken out of the water, may be placed on the feeding tray 22 together with the connection part 16. Transportation means, such as wheels 50 and a lever 52, may be attached to the feeding tray 22. This allows the trapping device to be compactly transported over land.

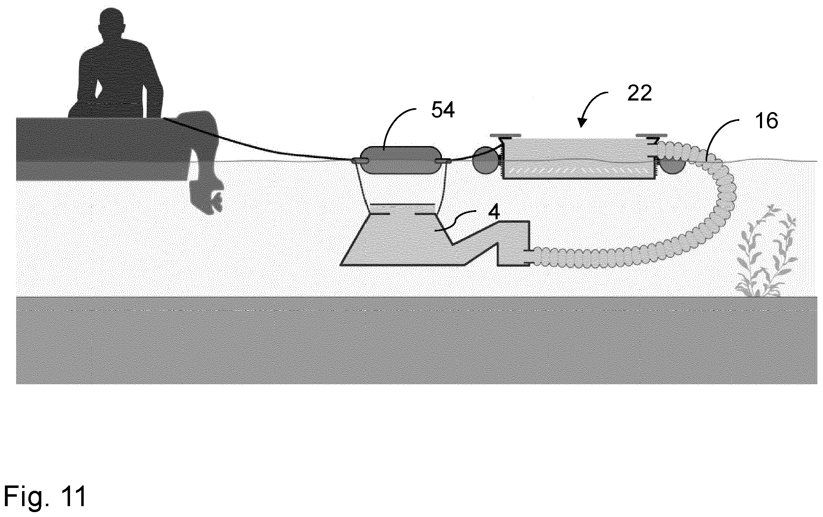

Fig. 11 shows an alternative method for transporting the trapping device to a new location. The animal trap 4, which may be made of some type of metal, such as steel, may be raised from the aquatic bed via a magnet 54. This allows the entire trapping device to be easily transported over water.

Besides the shown and described embodiments, numerous variants are possible. For example the dimensions and shapes of the various parts can be altered. Also it is possible to make combinations between advantageous aspects of the shown embodiments. Instead of using a cylindrical connection part, it may have any other desired shape, like angular, triangular, oval, etc. All kinds of materials can be used for the various components of the unit. Preferably however they are made of non degradable, water-resistant materials such as stainless steel, plastic, etc.

It should be understood that various changes and modifications to the presently preferred embodiments can be made without departing from the scope of the invention, and therefore will be apparent to those skilled in the art. It is therefore intended that such changes and modifications be covered by the appended claims.

## Claims

1. Method for reducing a population of harmful walking aquatic animals (32), comprising the steps of:
• placing an animal trap (4) in a body of water, which animal trap (4) delimits a trapping zone (8), wherein the animal trap (4) comprises one or more entry points (12) for the harmful animal (32) to enter the trapping zone (8), wherein the one or more entry points (12) are configured for preventing the harmful animal (32) from exiting the trapping zone (8) again via the one or more entry points (12), and wherein the animal trap (4) comprises at least one trap exit opening (10);
• placing an animal collector spaced away from the animal trap (4), which animal collector comprises at least one collector inlet opening (18); and
• providing a connection part (16) that comprises a first end connected to the trap exit opening (10) and a second end connected to the collector inlet opening (18), wherein the connection part (16) is configured for allowing the harmful animal (32) to walk from the animal trap (4) to the animal collector;
wherein at least a part of the animal collector is placed outside of the water, and
**characterized in that** the animal collector is formed by a feeding tray (22) that comprises an open top, and
wherein the method further comprises the step of:
• taking of the harmful walking aquatic animal (32) from the feeding tray (22) by natural enemies of the harmful walking aquatic animal (32).

2. Method according to claim 1, wherein the open top feeding tray (22) is continuously kept open during operation.

3. Method according to claim 1 or 2, further comprising the step of providing a bait supply (26) that automatically places bait (30) in the animal trap (4), preferably at regular intervals.

4. Method according to any one of the preceding claims, wherein the open top feeding tray (22) floats on the water surface of the body of water.

5. Method according to claim 4, wherein the open top feeding tray (22) comprises a layer of water (40) on its bottom surface during operation, which layer of water (40) is in flow communication with the body of water via one or more water-exchange openings (38) that are provided in the feeding tray (22), wherein the layer of water (40) in particular has a height in the range of 5-25 cm.

6. Trapping device (2) for reducing a population of harmful walking aquatic animals (32) according to the method of any one of the preceding claims, comprising
• an animal trap (4) in a body of water, which animal trap (4) delimits a trapping zone (8), wherein the animal trap (4) comprises one or more entry points (12) for the harmful animal (32) to enter the trapping zone (8), wherein the one or more entry points (12) are configured for preventing the harmful animal (32) from exiting the trapping zone (8) again via the one or more entry points (12), and wherein the animal trap (4) comprises at least one trap exit opening (10);
• an animal collector spaced away from the animal trap (4), which animal collector comprises at least one collector inlet opening (18); and
• a connection part (16) that comprises a first end connected to the trap exit opening (10) and a second end connected to the collector inlet opening (18), wherein the connection part (16) is configured for allowing the harmful animal (32) to walk from the animal trap (4) to the animal collector;
wherein at least a part of the animal collector is placed outside of the water,
**characterized in that** the animal collector is formed by a feeding tray (22) that comprises an open top for allowing natural enemies of the harmful walking aquatic animal (32) to take the harmful walking aquatic animal (32) from the feeding tray (22).

7. Trapping device (2) according to claim 6, wherein the open top feeding tray (22) is a lidless feeding tray (22).

8. Trapping device (2) according to any one of the claims 6-7, wherein the open top feeding tray (22) is configured for floating on the water surface of the body of water.

9. Trapping device according to claim 8, wherein the open top feeding tray (22) comprises floating members (42) connected to its outer side, in particular by means of height-adjustable connecting members (44).

10. Trapping device (2) according to any one the claims 6-9, wherein the open top feeding tray (22) comprises one or more water-exchange openings (38) that are configured to be in flow communication with the body of water for a layer of water (40) to be formed on the bottom surface of the feeding tray (22) during operation.

11. Trapping device according to any one of the claims 6-10, wherein the open top feeding tray (22) comprises a support platform or support bar for supporting the natural enemy to land and sit on when the natural enemy takes the harmful aquatic animal from the feeding tray (22), wherein the support platform in particular is formed by a sideways projecting flange (46) or overhang that circumvents at least part of or the entire open top feeding tray (22).

12. Trapping device (2) according to any one of the claims 6-11, wherein the open top feeding tray (22) has a height (h) in the range of 20-50 cm.

13. Trapping device (2) according to any one of the claims 6-12, comprising a bait supply (26) configured for automatically placing bait (30) in the animal trap (4), preferably at regular intervals.

14. Trapping device (2) according to claim 13, wherein the bait supply (26) comprises a bait dispenser (34) and a drop tube (27) configured for dropping and guiding bait (30) to the animal trap (4).

15. Trapping device (2) according to any one of the claims 6-14, further comprising an elevation element (35) positioned in the animal trap (4), wherein the elevation element (35) is configured for only allowing the harmful animal (32) to walk in the direction of the feeding tray (22) once the harmful animal (32) has walked across the elevation element (35).
